# EUROPEAN PATENT SPECIFICATION

(11) **EP 1 630 690 B1**
(45) Date of publication and mention of the grant of the patent: **04.01.2012**
(21) Application number: 04104180.7
(22) Date of filing: 31.08.2004
(51) Int. Cl.: G06F 17/30

(54) **Method for viewing document information on a mobile communication device**
Verfahren zur Betrachtung von Dokumentinformationen auf einem mobilen Kommunikationsgerät
Procédé de visualisation d'informations sur des documents sur un appareil de communication mobile

(43) Date of publication of application: 01.03.2006
(73) Proprietor: RESEARCH IN MOTION LIMITED, Waterloo, Ontario N2L 3W8 (CA)
(72) Inventor: Yuan, Jianwei (Oliver), 30041, Cumming, (US); Sylthe, Olav A., 30338 Atlanta (US); Dumitru, Dan, 30328, Atlanta, (US)
(74) Representative: MERH-IP Matias Erny Reichl Hoffmann

(56) References cited:
- WO-A-02/44948
- WO-A-2004/042507
- US-A1- 2004 139 397
- US-B1- 6 256 666
- US-B1- 6 360 252
- US-B2- 6 438 585
- M G SCHULTZ, E ESKIN, E ZADOK, M BHATTACHRYYA, S J STOLFO: "MEF: Malicious Email Filter - A UNIX Mail Filter that Detects Malicious Windows Executables" 30 June 2001 (2001-06-30), PROCEEDINGS OF THE FREENIX TRACK: 2001 USENIX ANNUAL TECHNICAL CONFERENCE , BOSTON, MASSACHUSETTS, USA , XP002300865 * abstract *
- "ON-DEMAND RETRIEVAL OF ATTACHED FILE IN MAIL SYSTEM" IBM TECHNICAL DISCLOSURE BULLETIN, IBM CORP. NEW YORK, US, vol. 41, no. 1, January 1998 (1998-01), page 623, XP000772234 ISSN: 0018-8689
- BORENSTEIN N ET AL: "RFC 1521; MIME (Multipurpose Internet Mail Extensions) Part One: Mechanisms for Specifying and Describing the Format of Internet Message Bodies" NETWORK WORKING GROUP REQUEST FOR COMMENTS, XX, XX, September 1993 (1993-09), pages 1-44, XP002260361
- JEM E. BERKES: 'renattach 1.2.1 README', [Online] 06 August 2004, www.pc-tools.net/unix/renattach/README Retrieved from the Internet: <URL:http://web.archive.org/web/20040806180 811/www.pc-tools.net/unix/renattach/README> [retrieved on 2010-11-30]

## Description

The following is directed in general to displaying content on mobile communication devices, and more particularly to a method for viewing document information about a document, on a mobile communication device, without having to retrieve the full document onto the device.

Mobile communication devices are becoming increasingly popular for business and personal use due to a relatively recent increase in number of services and features that the devices and mobile infrastructures support. Handheld mobile communication devices, sometimes referred to as mobile stations, are essentially portable computers having wireless capability, and come in various forms. These include Personal Digital Assistants (PDAs), cellular phones and smart phones. While their reduced size is an advantage to portability, bandwidth and processing constraints of such devices present challenges to the downloading and viewing of documents, such as word processing documents, tables and images. Also, as a result of their enhanced levels of functionality and computing power, handheld mobile communication devices are increasingly susceptible to attack by computer viruses.

Computer hackers commonly use email attachments as virus carriers to attack corporate network-connected computers. Therefore, email attachments are often identified as presenting a security threat for corporate networks. In order to protect such networks, many corporations and organizations use sophisticated systems to safely handle email attachments. One of the more common corporate approaches is to employ document management systems. One feature of such systems is that they usually rename email attachments with a common extension, for example ".tmp".
When the user of a mobile device receives an email with renamed attachments it is difficult for the user to determine which attachment is of interest based on file names alone. For example, if a mobile device user receives an email with attachments named 0001.tmp, 0002.tmp and 0003.tmp, and only one of them is a MS WORD® document that is of interest, the user is unable to identify the document from the common file extensions. The normal recourse in such a situation is to retrieve the document contents for all attachments from the remote document server, and successively review the documents in order to identify the desired one.
However, the downloading of an entire document from the server to a mobile communication device consumes a large amount of bandwidth, especially when the document is large. In addition, viewing even a portion of such a downloaded document on the device consumes substantial device CPU/memory/battery resources.
US6438585 discloses a system and method for redirecting email attachment documents to a suitable attachment displayer. The attachment displayer may be hosted by a mobile device to which the email is addressed. The method comprises receiving an email with an attachment document at a host device and removing the attachment document. A datagram comprising the original message and containing information about the attachment document such as file name, size and file type is transmitted to the mobile device. The attachment document is then redirected to a suitable attachment displayer for display. Where the attachment document is to be displayed on the mobile device, the method includes converting the attachment document into a format suitable for display on the mobile device prior to transmitting the converted attachment to the mobile device. Thus, upon receipt of an email at a host device such as a server, the original email message and information about the attachment document is automatically transmitted to the mobile device.
WO/0244948 discloses a method of displaying information indicative of the content of a target document. The disclosed information indicative of the content of said target document comprises summary information concerning a link in a web page, the display of which is triggered by the entry of a mouse-pointer into the active regions associated with those links.
An article by M G Schultz et al entitled "MEF Malicious Email Filter -A UNIX Mail Filter that Detects Malicious Windows Executables", 30th June 2001, Proceedings of the Freenix Track: Usenix Annual Technical Conference discloses a UNIX-based filter for malicious software. The filter uses data-mining methods to detect patterns in large amounts of data, such as byte code, to detect future instances in similar data along with known instances.
A technical note by JE Berkes entitled "renattach 1.2.1. README" to August 2004, http:\\www.pc-tools.net\unix\renattach\README discloses a UNIX filter for remaining or fittering email attachments based an assorted criteria, such as suffix, file signature, a black list or whrite list.

### Summary of the Invention

According to an aspect of the invention, a method is provided for viewing document information on a mobile communication device relating to an email attachment document of an email stored on a server, the process comprising: renaming said email attachment document at the server using a common file extension; transmitting said email from said server to said mobile communication device without transmitting said email attachment document from said server to said mobile communication device; transmitting a request for said document information from said mobile communication device to said server; processing said email attachment document stored on the server by opening said email attachment document in binary mode and searching it to obtain said document information, said searching comprising examining binary data of said email attachment document to find document information including the original document format type and adding the document information to a response to the request received from the mobile communication device; transmitting said response containing said document information to said mobile communication device; and receiving said response and displaying said document information according to the original document format type on said mobile communication device without having to retrieve full content of the email attachment document onto the mobile communication device, and down loading an attachment document to the mobile communication device if it is identified as being of interest by a user.

By using the method set forth herein, a user is able to identify a document of interest, without retrieving the document content from the server for each attachment in an email. This minimizes bandwidth usage and provides an enhanced on-demand attachment viewing experience. Also, eliminating unnecessary document content transmission to the device minimizes device power consumption.

Additional aspects and advantages will be apparent to a person of ordinary skill in the art, residing in the details of construction and operation as more fully hereinafter described and claimed, reference being had to the accompanying drawings.

### Brief Description of the Drawings

A detailed description of the preferred embodiment is set forth in detail below, with reference to the following drawings, in which:
Figure 1 is a block diagram of a network environment in which the preferred embodiment may be practiced;
Figure 2 is a tree diagram showing the basic structure of a Document Object Model (DOM) used in the preferred embodiment;
Figure 3 shows the top-level of the DOM structure in Figure 2;
Figure 4 shows an exemplary DOM structure for a word processing document;
Figure 5 shows an exemplary DOM structure for a table document;
Figure 6 shows an exemplary DOM structure for a word processing document containing an image subdocument;
Figure 7 is a flowchart showing document information construction and delivery according to the preferred embodiment; and
Figures 8A and 8B show static and dynamic display, respectively, of document information on a mobile communication device according to the preferred embodiment.

### Detailed Description of the Preferred Embodiment

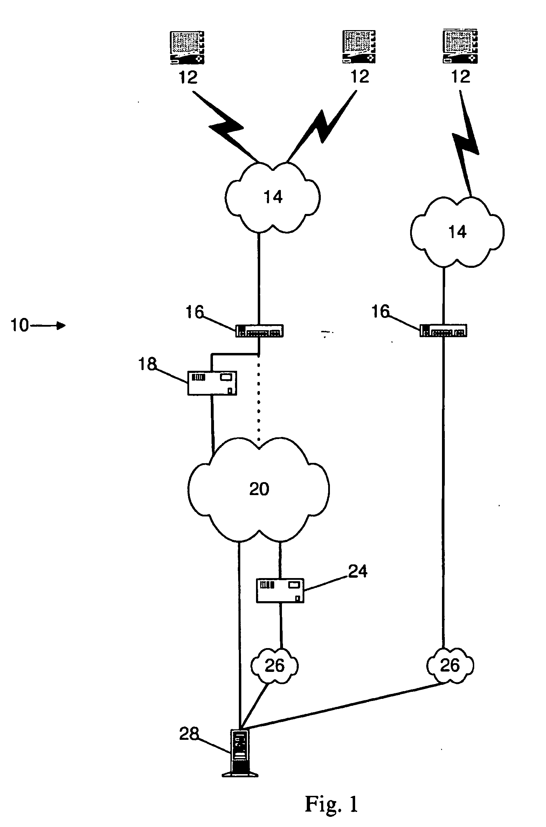

With reference to Figure 1, network environment 10 is shown in which the preferred embodiment may be practiced. Network environment 10 includes mobile devices 12 communicating via a wireless network 14 to a server 28 for downloading document attachments to the mobile devices 12. While only one server 28 is shown for illustration purposes, a person of skill in the art will understand that network environment 10 could have many such servers for hosting web sites or graphic download sites, providing access to picture files such as JPEG, TIFF, BMP, PNG, SGI, MP4, MOV, GIF, SVG, etc. As would be understood by one of ordinary skill in the art, wireless network 14 may be a GSM/GPRS, CDPD, TDMA, iDEN Mobitex, DataTAC network, or a future network such as EDGE or UMTS, or a broadband network such as Bluetooth and variants of 802.11.

A connection to a fixed service requires special considerations, and may require special permission as authorized through a Network Access Point (NAP) 16. For generic services, such as web access, a proxy-gateway or Network Address Translator (NAT) 18 may be provided so that a network operator can control and bill for the access. NATs 18 enable management of a limited supply of public Internet addresses for large populations of wireless mobile devices. Solutions offered by a proxy-gateway or NAT 18 often involve a complex infrastructure, and thus may be managed by value-added service providers (VASPs), which provide, for instance, WAP gateways, WAP proxy gateway solutions, multi-media messaging servers (MMS) and Internet Multi-Media Services (IMS).

Private Intranet services 26 may require an associated Private Intranet Proxy Gateway 24 for accessing content on server 28. Such private services include WML access to corporate mail systems, HTML access to CRM databases, or any other services that deliver information as formatted data with links and URLs embedded. As shown, it is possible that a private service 26 may be connected directly to the wireless network 14, as opposed to being connected via Internet 20.

Referred to throughout this document, for the purpose of describing the preferred embodiment, is the structure of a Document Object Model (DOM) for a document attachment to be viewed on a mobile device 12.

The attachment server 28 uses a file-parsing distiller in the preferred embodiment, for a specific document type, to build an in-memory Document Object Model (DOM) structure representing an attachment of that document type. The document DOM structure is stored in a memory cache of server 28, and can be iterated bidirectionally.

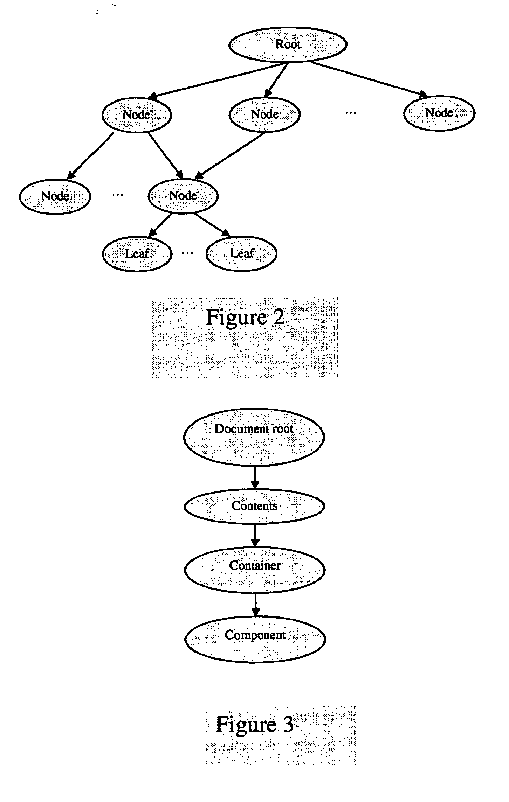

As shown in Figure 2, the graph-based document DOM structure consists of nodes and leaves. The nodes serve as the parents of leaves and nodes, while leaves are end points of a branch in the graph. Each node and leaf can have a set of attributes to specify its own characteristics. For example, a paragraph node can contain attributes to specify its alignment, style, entry of document TOC, etc. In addition, each of the nodes and the leaves has a unique identifier, called a DOM ID, to identify itself in the document DOM structure.

The document DOM structure is divided into three parts: top-level, component and references. The top level refers to the document root structure, while the main document is constructed in the component and the references represent document references to either internal or external sub-document parts. The following paragraphs examine each part in detail.

The root node of a document DOM structure, referred to as "Document", contains several children nodes, referred to as "Contents", which represent different aspects of the document contents. Each "Contents" node contains one or multiple "Container" nodes used to store various document global attributes. The children of the "Container" nodes are components, which store the document structural and navigational information. When the attachment server 28 builds the DOM structure for an attachment file for the first time, the top-level structure is a single parent-child chain as shown in Figure 3:

Three types of components are defined by the attachment server 28: text components, table components and image components, which represent text, tables and images in a document, respectively. The text and table components are described in detail below, and the image component structure is identical.

A component consists of a hierarchy of command nodes. Each command represents a physical entity, a property, or a reference defined in a document. For the text component, the physical entity commands are page, section, paragraph, text segments, comments, footnote and endnote commands, which by name define the corresponding entity contained in a document. The property commands for the text component are font, text color, text background color, hyperlink start/end and bookmark commands. The text component has only one reference command, referred to as the text reference command, which is used to reference a subdocument defined in the main body of a document. Usually, the children of a text component are page or section command nodes that, in turn, comprise a set of paragraph command nodes. The paragraph command can contain one or multiple nodes for the remaining command types.

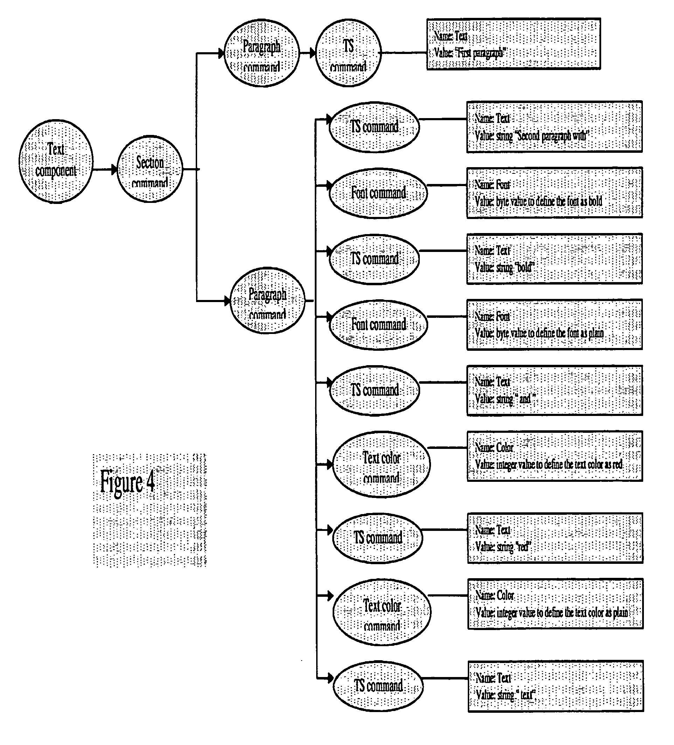

Using the following sample text document, the corresponding document DOM structure is shown in Figure 4:

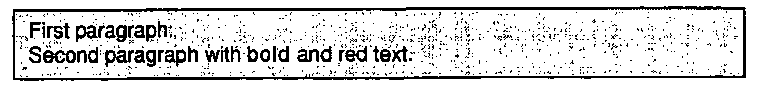

As Figure 4 demonstrates, the section command, which is the child of the text component, consists of two paragraph commands. The first paragraph command contains one text segment command and the text content for that paragraph is added as an attribute to the text segment command. The second paragraph command has a relatively more complex structure, as the text properties in the paragraph are much richer. Each time a text property (font, text color, etc) changes, a corresponding text property command is created and the change value is added to that command as an attribute. The subsequent text segment command records the text with the same text property as an attribute. As document structure gets richer and more complex, more commands of corresponding types are created and the document properties are added as attributes to those commands.

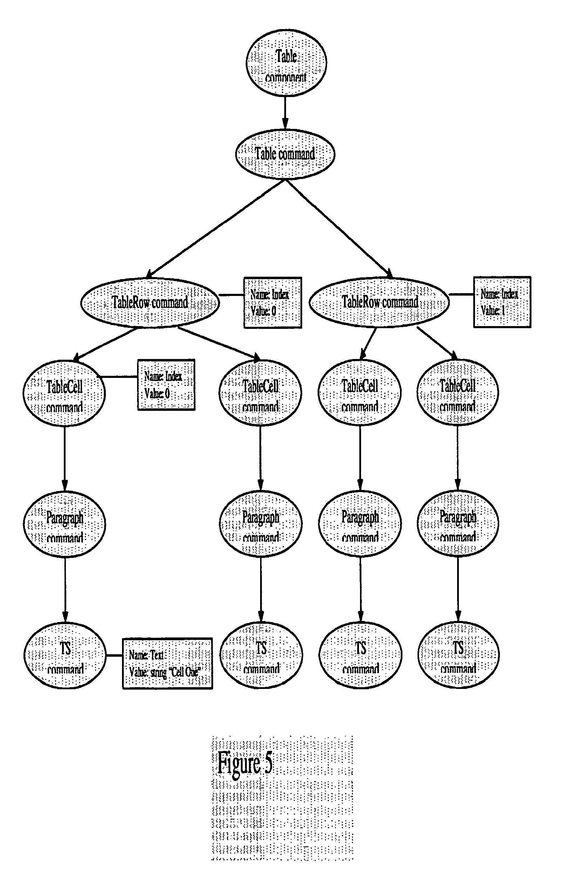

The table component has the same three types of commands as the text component, but different command names. The document DOM structure for the sample table document below is shown in Figure 5:

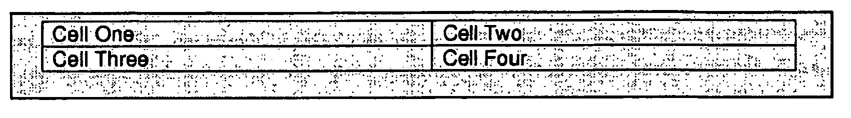

As shown in the Figure 5, the table component has physical entity type commands of table, tablerow and tablecell, where the tablecell command can contain all available commands for the text component. In the example above, the first child TableRow command of the table command has an attribute "Index" defined by value of 0. This indicates that the indicated table row is the first one defined in the table. The attribute of the leftmost table cell command in Figure 5 has the same meaning.

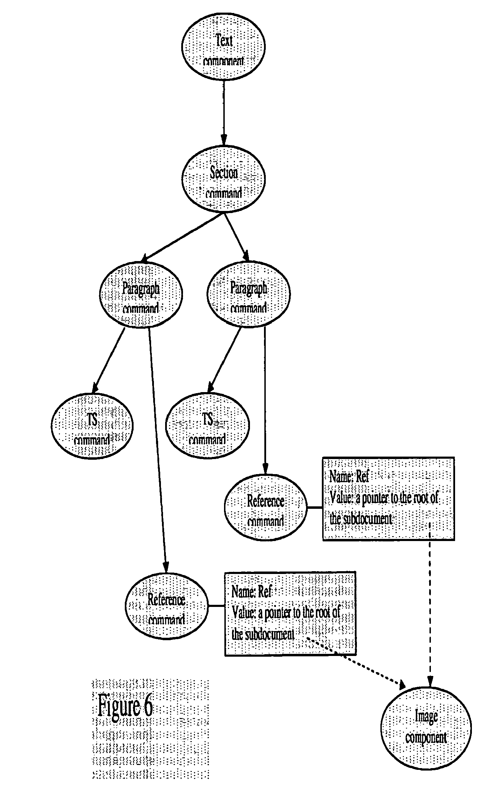

A document sometimes contains subdocuments, for example images, tables, text boxes etc. The DOM structure set forth herein uses a reference command to point to the graph of such subdocuments. Thus, for the following sample document, the attachment server 28 generates the DOM structure shown in Figure 6:

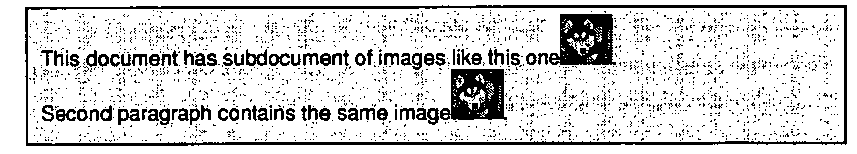

The structure shown in Figure 6 is identical to that discussed above in connection with Figures 4 and 5, except for the attributes of the two reference commands. The attachment server 28 constructs the image in "Sample Three" as a separate image component, which contains all of the image data in its own DOM hierarchy. In the DOM structure for the main document, the values of the "Ref" attributes of those two reference commands point to the image component, as indicated by the dashed lines, such that the DOM structure connects together all parts of the document.

Having described the document DOM structure used to implement an embodiment of the invention, a detailed discussion will now be provided of the document information construction, delivery and display function or method according to the preferred embodiment.

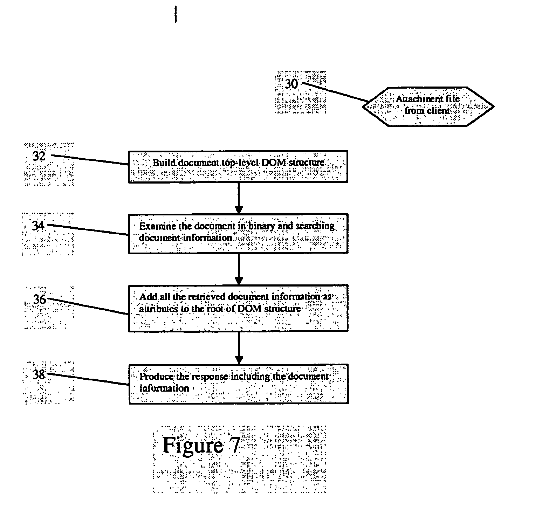

With reference to Figure 7, after receiving an email with renamed attachments on a mobile device 12 (step 30), the user can send a request to the server 28 for the associated document information. Once the server receives such a request, it initially constructs only the top level of the document DOM structure for the attachment (step 32), as discussed above in connection with Figure 3. Construction of the top level of the document DOM structure is a very fast operation, thereby minimizing wait time for the user. The server 28 then examines the document binary data (step 34) to find the basic document information (i.e. type, author, creation time and date, modified time and date, format type, etc) for the document.

Specifically, the file is opened in binary mode and searched to locate a file signature. The signature of the file is stored either at the beginning or at the end of a file (usually the first or last tens to a few hundred of bytes), and is used to indicate identify the file type (i.e. document original format type, discussed in greater below). For example, the signature of the PDF document original format type, "% PDF", is contained in the first 4 bytes of the raw binary data of a PDF file. For other types of information, the binary file must be searched further.

Or, since MS Office^{®} files are "storage" type files (rather than "stream" type files such as PDF and text file), which can contain sub-streams and sub-storage, the first 8 bytes need to be a fixed value. Therefore, after confirming that the file is "storage" type, the server 28 searches for a stream called "WordDocument" contained in the file to verify that a file is a MS Word^{®} file.

Directly examining binary data ensures that any macro or operation in the attachment is not executed, thereby eliminating any chance of virus attacks and/or other security threats.

After retrieving all of the available document information stored in the file, the server 28 adds the retrieved information as attributes to the root component of the DOM structure (step 36).

It will be appreciated that, compared to retrieval of the entire document contents, the document information search and construction process of Figure 7 is much simpler and quicker, especially for large documents, since the server 28 usually does not have to parse deep into the file to locate the document information. After the document information is constructed, the server 28 sends a response back to the client device 12 (step 38) over a standard transportation channel.

After the client device 12 receives the requested document information for an email attachment, it displays the information to the user according to type. Specifically, server 28 indicates the document original format type in five categories: Archives, Documents, Spreadsheets, Presentations and Images. These five categories are each represented by a unique icon displayed on the screen of the mobile device 12 which, according to the preferred embodiment, are as follows:

| Icon | Attachment Type | Supported Sub document types |
|---|---|---|
| 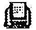 | Archives | ZIP Archives. Only used in Attachment List Screen |
| 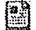 | Documents | MS Word, Adobe PDF, Corel WordPerfect, ASCII Text, HTML |
| 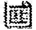 | Spreadsheets | MS Excel |
| 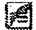 | Presentations | MS PowerPoint |
| 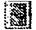 | Images | BMP, PNG, GIF, TIFF, JPEG |

The server 28 also preferably sends the document format subtype to the mobile device 12. For example, MS Word^{®} and Adobe^{®} PDF are both categorized as type "documents", which is further specified by the server 28 using the different subtypes, as indicated above. In addition to the document type, other document information, such as size, creation time, last modified time and author are also sent to the client device 12.

The client device 12 displays the information in a static or dynamic fashion. With static display, the client device 12 displays the information on a static area, (e.g. title bar, etc.) of the device screen. With dynamic display, the client device 12 first caches the document information and then displays it using dynamic GUI elements, (e.g. pop-up message box, etc.) in response to a query from the user.

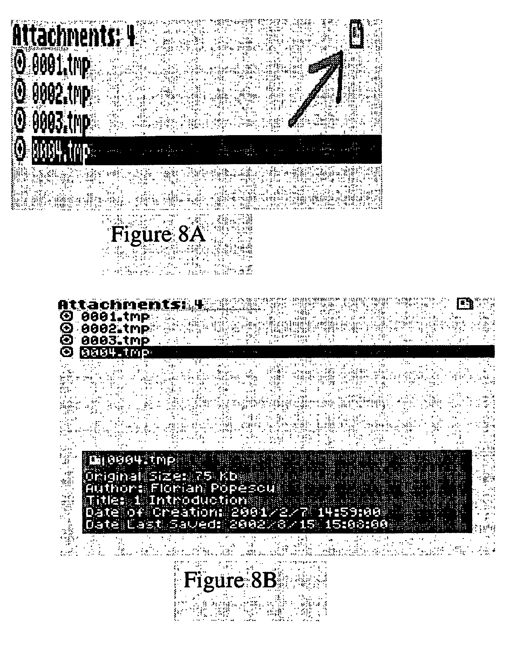

Figure 8A shows a static display of document type whereas Figure 8B shows both the static display of document type and a pop-up message box for dynamic representation of the remaining document information sent from the server 28.

In summary, the method of document information delivery and display according to the preferred embodiment allows a mobile device user to quickly determine if an attachment is of interest without having to retrieve the document content itself, thereby minimizing overall network bandwidth.

A person skilled in the art, having read this description of the preferred embodiment, may conceive of variations and alternative embodiments. All such variations and alternative embodiments are believed to be within the ambit of the claims appended hereto.

## Claims

1. A process for viewing document information on a mobile communication device (12) relating to an email attachment document of an email stored on a server (28),
the process comprising:
renaming said email attachment document by the server using a temporary file extension;
transmitting, by the server, said email from said server to said mobile communication device without transmitting said email attachment document from said server to said mobile communication device;
transmitting, by the mobile communication device, a request for document information from said mobile communication device to said server, wherein the document information includes an original document format type of the email attachment document;
processing, by the server, said email attachment document stored on the server by opening said email attachment document In binary mode and searching it to obtain said document information, said searching comprising examining binary data of said email attachment document to find document information including the original document format type and adding the document information to a response to the request received from the mobile communication device;
transmitting, by the server, said response containing said document information to said mobile communication device; and
receiving said response containing said document information on said mobile communication device and displaying, by the mobile communication device, said document information according to the original document format type on said mobile communication device without having to retrieve full content of the email attachment document onto the mobile communication device, and
downloading an attachment document to the mobile communication device if it is identified as being of interest by a user.

2. The process of claim 1, wherein said processing step comprises constructing a graph structure within said server, said graph structure containing said document information.

3. The process of claim 2, wherein said constructing further comprises creating a root node, and at least one child node for storing contents of said email attachment document, examining said email attachment document for said document information, retrieving said document information and adding said document information to said root node.

4. The process of claim 3, wherein said document information is added to said root node as an attribute.

5. The process of any one of claims 2 to 4, wherein said graph structure is a Document Object Model (DOM).

6. The process of any one of claims 1 to 5, wherein said displaying further comprises presenting said document information on a static screen area of said mobile communication device.

7. The process of claim 6, wherein said static screen area is a title bar.

8. The process of any one of claims 1 to 5, wherein said displaying further comprises caching and then presenting said document information using GUI elements on a dynamic screen area of said mobile communication device.

9. The process of claim 8, wherein said GUI elements include a pop-up message box.

10. A process for generating document information at a server (28) for transmitting to a mobile communication device (12) relating to an email attachment document of an email stored on the server, the process comprising the steps performed by the server of:
renaming said email attachment document using a temporary file extension;
transmitting said email to said mobile communication device without transmitting said email attachment document to said mobile communication device;
receiving a request for document Information from said mobile communication device, wherein the document information includes an original document format type of the email attachment document:
processing said email attachment document by opening said email attachment document in binary mode and searching it to obtain said document information, said searching comprising examining binary data of said email attachment document to find document information including the original document format type and adding the document information to a response to the request received from the mobile communication device; and
transmitting the response containing said document information to said mobile communication device, and
downloading an attachment document to the mobile communication device if it is identified as being of interest by a user

11. The process of claim 10, wherein said processing step comprises constructing a graph structure within said server, said graph structure containing said document information.

12. The process of claim 11, wherein said constructing further comprises creating a root node, and at least one child node for storing contents of said email attachment document, examining said email attachment document for said document information, retrieving said document information and adding said document information to said root node.

13. The process of claim 12, wherein said document information is added to said root node as an attribute.

14. The process of any one of claims 11 to 13, wherein said graph structure is a Document Object Model (DOM).

15. A process for receiving document information for display on a mobile communication device (12), said document information relating to an email attachment document of an email stored on a server (28), the process comprising the steps performed by the mobile communication device of:
receiving said email without the email attachment document from said server, said email attachment document having been renamed by said server using a temporary file extension;
transmitting a request for document information including document file type to said server, wherein the document information includes an original document format type of the email attachment document;
receiving said document information from said server wherein said document information is derived by processing at the server by opening said email attachment document in binary mode and searching it to obtain said document information, said searching comprising examining binary data of said email attachment document to find document information including the original document format type; and
displaying said document information according to the original document format type without having to retrieve full content of the email attachment document onto the mobile communication device, and
downloading an attachment document to the mobile communication device if it is identified as being of interest by a user.

16. The process of claim 15, wherein said document information is received at said mobile communication device as a graph structure containing said document information.

17. The process of claim 15 or claim 16, wherein said received document information is statically or dynamically displayed on said mobile communication device.

18. The process of claim 17, wherein said statically displaying further comprises presenting said document information on a static screen area of said mobile communication device where said static screen area is a title bar.

19. The process of claim 17, wherein said dynamically displaying further comprises caching and then presenting said document information using GUI elements on a dynamic screen area of said mobile communication device.

20. The process of claim 19, wherein said GUI elements include a pop-up message box.

21. The process according to any one of claims 1 to 20, wherein said document information includes any of (i) document original format type including any one or more of Archives, Documents, Spreadsheets, Presentations and Images represented on said mobile device by respective icons, (ii) format subtype for identifying a unique software application, and (iii) other document information including at least one of size, creation time, last modified time and author.

22. A system (10) for viewing document information on a mobile communication device (12) relating to an email attachment document of an email stored on a server (28), said system comprising:
means for renaming said email attachment document at the server using a temporary file extension;
means for transmitting said email from said server to said mobile communication device without transmitting said email attachment document from said server to said mobile communication device;
means for transmitting a request for document information from said mobile communication device to said server, wherein the document information includes an original document format type of the email attachment document;
means for processing said email attachment document stored on the server by opening said email attachment document in binary mode and searching it to obtain said document information, said searching comprising examining binary data of said email attachment document to find document information including the original document format type and adding the document information to a response to the request received from the mobile communication device;
means for transmitting said response containing said document information to said mobile communication device; and
means for receiving said response on said mobile communication device and means for displaying said document information on said mobile communication device according to the original document format type without having to retrieve full content of the email attachment document onto the mobile communication device, and
means for downloading an attachment document to the mobile communication device if it is identified as being of interest by a user.

23. A server (28) for generating document information relating to an email attachment document of an email stored on the server, comprising:
means for renaming said email attachment document using a temporary file extension;
means for transmitting said email to said mobile communication device (12) without transmitting said email attachment document to said mobile communication device;
means for receiving a request for document Information from said mobile, communication device, wherein the document information includes an original document format type of the email attachment document;
means for processing said email attachment document by opening said email attachment document in binary mode and searching it to obtain said document information, said searching comprising examining binary data of said email attachment document to find document information including the original document format type and adding the document information to a response to the request received from the mobile communication device; and
means for transmitting said response containing said document information to said mobile communication device, and
means for downloading an attachment document to the mobile communication device if it is identified as being of interest by a user.

24. A mobile communication device (12) for receiving and displaying document Information relating to an email attachment document of an email stored on a server (28), comprising:
means for receiving said email without the email attachment document from said server, said email attachment document having been renamed by said server using a temporary file extension;
means for transmitting a request for document information including an original document format type of the email attachment document to said server;
means for receiving said document information from said server wherein said document information is derived by processing at the server by opening said email attachment document in binary mode and searching it to obtain said document information, said searching comprising examining binary data of said email attachment document to find document Information including the original document format type; and
means for displaying said document information according to the original document format type without having to retrieve full content of the email attachment document onto the mobile communication device, and
means for downloading an attachment document to the mobile communication device if it is identified as being of interest by a user.

## Patentansprüche

1. Verfahren zum Betrachten von Dokumentinformation auf einer mobilen Kommunikationsvorrichtung (12), die ein Email-Anhang-Dokument einer Email betrifft, die auf einem Server (28) gespeichert ist, wobei das Verfahren aufweist:
Umbenennen des Email-Anhang-Dokuments durch den Server unter Verwendung einer temporären Dateierweiterung;
Übertragen, durch den Server, der Email von dem Server an die mobile Kommunikationsvorrichtung, ohne das Email-Anhang-Dokument von dem Server an die mobile Kommunikationsvorrichtung zu übertragen;
Übertragen, durch die mobile Kommunikationsvorrichtung, einer Anforderung für eine Dokumentinformation von der mobilen Kommunikationsvorrichtung an den Server, wobei die Dokumentinformation einen ursprünglichen Dokumentformattyp des Email-Anhang-Dokuments umfasst;
Verarbeiten, durch den Server, des Email-Anhang-Dokuments, das in dem Server gespeichert ist, durch Öffnen des Email-Anhang-Dokuments in einem binären Modus und Durchsuchen desselben, um die Dokumentinformation zu erlangen, wobei das Suchen aufweist ein Untersuchen von binären Daten des Email-Anhang-Dokuments, um Dokumentinformation zu finden, einschließlich des ursprünglichen Dokumentformattyps, und Hinzufügen der Dokumentinformation zu einer Antwort auf die Anforderung, die von der mobilen Kommunikationsvorrichtung empfangen wird;
Übertragen, durch den Server, der Antwort, die die Dokumentinformation enthält, an die mobile Kommunikationsvorrichtung; und
Empfangen der Antwort mit der Dokumentinformation an der mobilen Kommunikationsvorrichtung und Anzeigen, durch die mobile Kommunikationsvorrichtung, der Dokumentinformation gemäß dem ursprünglichen Dokumentformattyp auf der mobilen Kommunikationsvorrichtung, ohne einen vollständigen Inhalt des Email-Anhang-Dokuments auf die mobile Kommunikationsvorrichtung abrufen zu müssen, und
Herunterladen eines Anhang-Dokuments auf die mobile Kommunikationsvorrichtung, wenn es als von Interesse für einen Benutzer identifiziert wird.

2. Verfahren gemäß Anspruch 1, wobei der Verarbeitungsschritt ein Konstruieren einer Graph-Struktur in dem Server aufweist, wobei die Graph-Struktur die Dokumentinformation enthält.

3. Verfahren gemäß Anspruch 2, wobei das Konstruieren weiter aufweist ein Erzeugen eines Wurzelknotens und zumindest eines Kindknotens zum Speichern von Inhalten des Email-Anhang-Dokuments, Untersuchen des Email-Anhang-Dokuments hinsichtlich der Dokumentinformation, Abrufen der Dokumentinformation und Hinzufügen der Dokumentinformation zu dem Wurzelknoten.

4. Verfahren gemäß Anspruch 3, wobei die Dokumentinformation zu dem Wurzelknoten als ein Attribut hinzugefügt wird.

5. Verfahren gemäß einem der Ansprüche 2 bis 4, wobei die Graph-Struktur ein DOM (Document Object Model) ist.

6. Verfahren gemäß einem der Ansprüche 1 bis 5, wobei das Anzeigen weiter aufweist ein Präsentieren der Dokumentinformation auf einem statischen Bildschirmbereich der mobilen Kommunikationsvorrichtung.

7. Verfahren gemäß Anspruch 6, wobei der statische Bildschirmbereich eine Titelleiste ist.

8. Verfahren gemäß einem der Ansprüche 1 bis 5, wobei das Anzeigen weiter aufweist ein Speichern und dann Präsentieren der Dokumentinformation unter Verwendung von GUI-Elementen auf einem dynamischen Bildschirmbereich der mobilen Kommunikationsvorrichtung.

9. Verfahren gemäß Anspruch 8, wobei die GUI-Elemente eine Pop-Up-Nachrichten-Box umfassen.

10. Verfahren zum Erzeugen von Dokumentinformation an einem Server (28) zum Übertragen an eine mobile Kommunikationsvorrichtung (12), die ein Email-Anhang-Dokument einer Email betrifft, die auf dem Server gespeichert ist, wobei das Verfahren die Schritte aufweist, die durch den Server durchgeführt werden:
Umbenennen des Email-Anhang-Dokuments unter Verwendung einer temporären Dateierweiterung;
Übertragen der Email an die mobile Kommunikationsvorrichtung, ohne das Email-Anhang-Dokument an die mobile Kommunikationsvorrichtung zu übertragen;
Empfangen einer Anforderung für eine Dokumentinformation von der mobilen Kommunikationsvorrichtung, wobei die Dokumentinformation einen ursprünglichen Dokumentformattyp des Email-Anhang-Dokuments umfasst;
Verarbeiten des Email-Anhang-Dokuments durch Öffnen des Email-Anhang-Dokuments in einem binären Modus und Durchsuchen desselben, um die Dokumentinformation zu erlangen, wobei das Suchen aufweist ein Untersuchen von binären Daten des Email-Anhang-Dokuments, um Dokumentinformation zu finden, einschließlich des ursprünglichen Dokumentformattyps, und Hinzufügen der Dokumentinformation zu einer Antwort auf die Anforderung, die von der mobilen Kommunikationsvorrichtung empfangen wird; und
Übertragen der Antwort, die die Dokumentinformation enthält, an die mobile Kommunikationsvorrichtung, und
Herunterladen eines Anhang-Dokuments auf die mobile Kommunikationsvorrichtung, wenn es als von Interesse für einen Benutzer identifiziert wird.

11. Verfahren gemäß Anspruch 10, wobei der Verarbeitungsschritt ein Konstruieren einer Graph-Struktur in dem Server aufweist, wobei die Graph-Struktur die Dokumentinformation enthält.

12. Verfahren gemäß Anspruch 11, wobei das Konstruieren weiter aufweist ein Erzeugen eines Wurzelknotens und zumindest eines Kindknotens zum Speichern von Inhalten des Email-Anhang-Dokuments, Untersuchen des Email-Anhang-Dokuments hinsichtlich der Dokumentinformation, Abrufen der Dokumentinformation und Hinzufügen der Dokumentinformation zu dem Wurzelknoten.

13. Verfahren gemäß Anspruch 12, wobei die Dokumentinformation zu dem Wurzelknoten als ein Attribut hinzugefügt wird.

14. Verfahren gemäß einem der Ansprüche 11 bis 13, wobei die Graph-Struktur ein DOM (Document Object Model) ist.

15. Verfahren zum Empfangen von Dokumentinformation zur Anzeige auf einer mobilen Kommunikationsvorrichtung (12), wobei die Dokumentinformation ein Email-Anhang-Dokument einer Email betrifft, die auf einem Server (28) gespeichert ist, wobei das Verfahren die Schritte aufweist, die durch die mobile Kommunikationsvorrichtung durchgeführt werden:
Empfangen der Email ohne das Email-Anhang-Dokument von dem Server, wobei das Email-Anhang-Dokument von dem Server umbenannt wurde unter Verwendung einer temporären Dateierweiterung;
Übertragen einer Anforderung für eine Dokumentinformation, einschließlich eines Dokumentformattyps, an den Server, wobei die Dokumentinformation einen ursprünglichen Dokumentformattyp des Email-Anhang-Dokuments umfasst;
Empfangen der Dokumentinformation von dem Server, wobei die Dokumentinformation abgeleitet wird durch eine Verarbeitung an dem Server durch Öffnen des Email-Anhang-Dokuments in einem binären Modus und
Durchsuchen desselben, um die Dokumentinformation zu erlangen, wobei das Suchen aufweist ein Untersuchen von binären Daten des Email-Anhang-Dokuments, um Dokumentinformation zu finden, einschließlich des ursprünglichen Dokumentformattyps; und
Anzeigen der Dokumentinformation gemäß dem ursprünglichen Dokumentformattyp, ohne einen vollständigen Inhalt des Email-Anhang-Dokuments auf die mobile Kommunikationsvorrichtung abrufen zu müssen, und
Herunterladen eines Anhang-Dokuments auf die mobile Kommunikationsvorrichtung, wenn es als von Interesse für einen Benutzer identifiziert wird.

16. Verfahren gemäß Anspruch 15, wobei die Dokumentinformation an der mobilen Kommunikationsvorrichtung als eine Graph-Struktur empfangen wird, die die Dokumentinformation enthält.

17. Verfahren gemäß Anspruch 15 oder Anspruch 16, wobei die empfangene Dokumentinformation statisch oder dynamisch auf der mobilen Kommunikationsvorrichtung angezeigt wird.

18. Verfahren gemäß Anspruch 17, wobei das statische Anzeigen weiter aufweist ein Präsentieren der Dokumentinformation auf einem statischen Bildschirmbereich der mobilen Kommunikationsvorrichtung, wobei der statische Bildschirmbereich eine Titelleiste ist.

19. Verfahren gemäß Anspruch 17, wobei das dynamische Anzeigen weiter aufweist ein Speichern und dann Präsentieren der Dokumentinformation unter Verwendung von GUI-Elementen auf einem dynamischen Bildschirmbereich der mobilen Kommunikationsvorrichtung.

20. Verfahren gemäß Anspruch 19, wobei die GUI-Elemente eine Pop-Up-Nachrichten-Box umfassen.

21. Verfahren gemäß einem der Ansprüche 1 bis 20, wobei die Dokumentinformation eines umfasst aus (i) ein ursprünglicher Dokumentformattyp, einschließlich eines oder mehrere aus Archiven, Dokumenten, Tabellen, Präsentationen und Bildern, die auf der mobilen Vorrichtung durch entsprechende Symbole repräsentiert werden, (ii) Formatteiltyp zum Identifizieren einer eindeutigen Softwareanwendung, und (iii) andere Dokumentinformation, einschließlich zumindest eines aus Größe, Erstellungszeitpunkt, letzte Änderung und Autor.

22. System (10) zum Betrachten von Dokumentinformation auf einer mobilen Kommunikationsvorrichtung (12), die ein Email-Anhang-Dokument einer Email betrifft, die auf einem Server (28) gespeichert ist, wobei das System aufweist:
Mittel zum Umbenennen des Email-Anhang-Dokuments an dem Server unter Verwendung einer temporären Dateierweiterung;
Mittel zum Übertragen der Email von dem Server an die mobile Kommunikationsvorrichtung, ohne das Email-Anhang-Dokument von dem Server an die mobile Kommunikationsvorrichtung zu übertragen;
Mittel zum Übertragen einer Anforderung für eine Dokumentinformation von der mobilen Kommunikationsvorrichtung an den Server, wobei die Dokumentinformation einen ursprünglichen Dokumentformattyp des Email-Anhang-Dokuments umfasst;
Mittel zum Verarbeiten des Email-Anhang-Dokuments, das auf dem Server gespeichert ist, durch Öffnen des Email-Anhang-Dokuments in einem binären Modus und Durchsuchen desselben, um die Dokumentinformation zu erlangen, wobei das Suchen aufweist ein Untersuchen von binären Daten des Email-Anhang-Dokuments, um Dokumentinformation zu finden, einschließlich des ursprünglichen Dokumentformattyps, und Hinzufügen der Dokumentinformation zu einer Antwort auf die Anforderung, die von der mobilen Kommunikationsvorrichtung empfangen wird;
Mittel zum Übertragen der Antwort, die die Dokumentinformation enthält, an die mobile Kommunikationsvorrichtung; und
Mittel zum Empfangen der Antwort an der mobilen Kommunikationsvorrichtung und Mittel zum Anzeigen der Dokumentinformation auf der mobilen Kommunikationsvorrichtung gemäß dem ursprünglichen Dokumentformattyp, ohne einen vollständigen Inhalt des Email-Anhang-Dokuments auf die mobile Kommunikationsvorrichtung abrufen zu müssen, und
Mittel zum Herunterladen eines Anhang-Dokuments auf die mobile Kommunikationsvorrichtung, wenn es als von Interesse für einen Benutzer identifiziert wird.

23. Server (28) zum Erzeugen von Dokumentinformation, die ein Email-Anhang-Dokument einer Email betrifft, die auf dem Server gespeichert ist, der aufweist:
Mittel zum Umbenennen des Email-Anhang-Dokuments unter Verwendung einer temporären Dateierweiterung;
Mittel zum Übertragen der Email an die mobile Kommunikationsvorrichtung (12), ohne das Email-Anhang-Dokument an die mobile Kommunikationsvorrichtung zu übertragen;
Mittel zum Empfangen einer Anforderung für eine Dokumentinformation von der mobilen Kommunikationsvorrichtung, wobei die Dokumentinformation einen ursprünglichen Dokumentformattyp des Email-Anhang-Dokuments umfasst;
Mittel zum Verarbeiten des Email-Anhang-Dokuments durch Öffnen des Email-Anhang-Dokuments in einem binären Modus und Durchsuchen desselben, um die Dokumentinformation zu erlangen, wobei das Suchen aufweist ein Untersuchen von binären Daten des Email-Anhang-Dokuments,
um Dokumentinformation zu finden, einschließlich des ursprünglichen Dokumentformattyps, und Hinzufügen der Dokumentinformation zu einer Antwort auf die Anforderung, die von der mobilen Kommunikationsvorrichtung empfangen wird;
Mittel zum Übertragen der Antwort, die die Dokumentinformation enthält, an die mobile Kommunikationsvorrichtung, und
Mittel zum Herunterladen eines Anhang-Dokuments auf die mobile Kommunikationsvorrichtung, wenn es als von Interesse für einen Benutzer identifiziert wird.

24. Mobile Kommunikationsvorrichtung (12) zum Empfangen und Anzeigen von Dokumentinformation, die ein Email-Anhang-Dokument einer Email betrifft, die auf einem Server (28) gespeichert ist, die aufweist:
Mittel zum Empfangen der Email ohne das Email-Anhang-Dokument von dem Server, wobei das Email-Anhang-Dokument von dem Server umbenannt wurde unter Verwendung einer temporären Dateierweiterung;
Mittel zum Übertragen einer Anforderung für eine Dokumentinformation, einschließlich eines ursprünglichen Dokumentformattyps des Email-Anhang-Dokuments, an den Server;
Mittel zum Empfangen der Dokumentinformation von dem Server, wobei die Dokumentinformation abgeleitet wird durch eine Verarbeitung an dem Server durch Öffnen des Email-Anhang-Dokuments in einem binären Modus und Durchsuchen desselben, um die Dokumentinformation zu erlangen,
wobei das Suchen aufweist ein Untersuchen von binären Daten des Email-Anhang-Dokuments, um Dokumentinformation zu finden, einschließlich des ursprünglichen Dokumentformattyps; und
Mittel zum Anzeigen der Dokumentinformation gemäß dem ursprünglichen Dokumentformattyp, ohne einen vollständigen Inhalt des Email-Anhang-Dokuments auf die mobile Kommunikationsvorrichtung abrufen zu müssen, und
Mittel zum Herunterladen eines Anhang-Dokuments auf die mobile Kommunikationsvorrichtung, wenn es als von Interesse für einen Benutzer identifiziert wird.

## Revendications

1. Procédé de visualisation, sur un dispositif de communication mobile (12), d'informations documentaires intéressant un document annexé comme pièce jointe de courriel, pour un courriel stocké sur un serveur (28), le procédé comprenant les étapes consistant à :
renommer ledit document annexé comme pièce jointe de courriel, par le serveur, à l'aide d'une extension de fichier temporaire ;
transmettre par le serveur ledit courriel entre ledit serveur et ledit dispositif de communication mobile, sans transmettre ledit document annexé comme pièce jointe de courriel entre ledit serveur et ledit dispositif de communication mobile ;
transmettre par le dispositif de communication mobile une demande d'informations documentaires entre ledit dispositif de communication mobile et ledit serveur, les informations documentaires incluant un type de format original du document pour le document annexé comme pièce jointe de courriel ;
traiter par le serveur ledit document annexé comme pièce jointe de courriel stocké sur le serveur en ouvrant ledit document annexé comme pièce jointe de courriel en mode binaire et en y réalisant une recherche pour obtenir lesdites informations documentaires, ladite recherche comprenant l'étape consistant à examiner les données binaires dudit document annexé comme pièce jointe de courriel afin d'y trouver des informations documentaires comprenant le type de format original du document et à ajouter les informations documentaires à une réponse à la demande reçue du dispositif de communication mobile ;
transmettre par le serveur ladite réponse contenant lesdites informations documentaires vers ledit dispositif de communication mobile ; et
recevoir ladite réponse comprenant lesdites informations documentaires sur ledit dispositif de communication mobile et afficher par le dispositif de communication mobile lesdites informations documentaires en fonction du type de format original du document sur ledit dispositif de communication mobile sans qu'il soit nécessaire d'obtenir la totalité du contenu du document annexé comme pièce jointe de courriel sur le dispositif de communication mobile ; et
télécharger un document annexé comme pièce jointe vers le dispositif de communication mobile s'il est identifié comme intéressant par un utilisateur.

2. Procédé selon la revendication 1, dans lequel ladite étape de traitement comprend l'étape consistant à construire une structure de graphe sur ledit serveur, ladite structure de graphe contenant lesdites informations documentaires.

3. Procédé selon la revendication 2, dans lequel ladite étape de construction comprend en outre les étapes consistant à créer un noeud racine et au moins un noeud enfant afin de stocker le contenu dudit document annexé comme pièce jointe de courriel, à examiner ledit document annexé comme pièce jointe de courriel pour obtenir des informations documentaires, à obtenir lesdites informations documentaires et à ajouter lesdites informations documentaires audit noeud racine.

4. Procédé selon la revendication 3, dans lequel lesdites informations documentaires sont ajoutées audit noeud racine sous la forme d'un attribut.

5. Procédé selon l'une quelconque des revendications 2 à 4, dans lequel ladite structure de graphe est un modèle d'objet documentaire (DOM pour « *Document Object Model* »).

6. Procédé selon l'une quelconque des revendications 1 à 5, dans lequel ladite étape d'affichage comprend en outre l'étape consistant à présenter lesdites informations documentaires dans une zone statique de l'écran dudit dispositif de communication mobile.

7. Procédé selon la revendication 6, dans lequel ladite zone statique de l'écran est une barre de titre.

8. Procédé selon l'une quelconque des revendications 1 à 5, dans lequel ladite étape d'affichage comprend en outre l'étape consistant à mettre lesdites informations documentaires en mémoire-cache puis à les présenter à l'aide d'éléments d'interface utilisateur graphique dans une zone dynamique de l'écran dudit dispositif de communication mobile.

9. Procédé selon la revendication 8, dans lequel lesdits éléments d'interface utilisateur graphique comprennent une boîte de message surgissante.

10. Procédé de production sur un serveur (28) d'informations documentaires à transmettre à un dispositif de communication mobile (12), intéressant un document annexé comme pièce jointe de courriel pour un courriel stocké sur le serveur, le procédé comprenant les étapes, exécutées par le serveur, consistant à :
renommer ledit document annexé comme pièce jointe de courriel à l'aide d'une extension de fichier temporaire ;
transmettre ledit courriel audit dispositif de communication mobile sans transmettre ledit document annexé comme pièce jointe de courriel audit dispositif de communication mobile ;
recevoir une demande d'informations documentaires en provenance dudit dispositif de communication mobile, les informations documentaires incluant un type de format original de document pour le document annexé comme pièce jointe de courriel ;
traiter ledit document annexé comme pièce jointe de courriel en ouvrant ledit document annexé comme pièce jointe de courriel en mode binaire et en y réalisant une recherche pour obtenir lesdites informations documentaires, ladite recherche comprenant l'étape consistant à examiner les données binaires dudit document annexé comme pièce jointe de courriel afin d'y trouver des informations documentaires comprenant le type de format original du document et à ajouter les informations documentaires à une réponse à la demande reçue du dispositif de communication mobile ; et
transmettre ladite réponse contenant lesdites informations documentaires vers ledit dispositif de communication mobile ; et
télécharger un document annexé comme pièce jointe vers le dispositif de communication mobile s'il est identifié comme intéressant par un utilisateur.

11. Procédé selon la revendication 10, dans lequel ladite étape de traitement comprend l'étape consistant à construire une structure de graphe sur ledit serveur, ladite structure de graphe contenant lesdites informations documentaires.

12. Procédé selon la revendication 11, dans lequel ladite étape de construction comprend en outre les étapes consistant à créer un noeud racine et au moins un noeud enfant afin de stocker le contenu dudit document annexé comme pièce jointe de courriel, à examiner ledit document annexé comme pièce jointe de courriel pour obtenir des informations documentaires, à obtenir lesdites informations documentaires et à ajouter lesdites informations documentaires audit noeud racine.

13. Procédé selon la revendication 12, dans lequel lesdites informations documentaires sont ajoutées audit noeud racine sous la forme d'un attribut.

14. Procédé selon l'une quelconque des revendications 11 à 13, dans lequel ladite structure de graphe est un modèle d'objet documentaire (DOM).

15. Procédé de réception d'informations documentaires destinées à être affichées sur un dispositif de communication mobile (12), lesdites informations documentaires intéressant un document annexé comme pièce jointe de courriel pour un courriel stocké sur un serveur (28), le procédé comprenant les étapes, exécutées par le dispositif de communication mobile, consistant à :
recevoir dudit serveur ledit courriel sans le document annexé comme pièce jointe de courriel, ledit document annexé comme pièce jointe de courriel ayant été renommé par ledit serveur à l'aide d'une extension de fichier temporaire ;
transmettre vers ledit serveur une demande d'informations documentaires incluant le type de fichier du document, les informations documentaires comprenant un type de format original de document pour le document annexé comme pièce jointe de courriel ;
recevoir dudit serveur lesdites informations documentaires, lesdites informations documentaires étant produites par un traitement sur le serveur consistant à ouvrir ledit document annexé comme pièce jointe de courriel en mode binaire et à effectuer une recherche pour obtenir lesdites informations documentaires, ladite étape de recherche comprenant l'examen des données binaires dudit document annexé comme pièce jointe de courriel afin de trouver des informations documentaires incluant le type de format original du document ; et
afficher lesdites informations documentaires en fonction du type de format original du document sans qu'il soit nécessaire d'obtenir la totalité du contenu du document annexé comme pièce jointe de courriel sur le dispositif de communication mobile ; et
télécharger un document annexé comme pièce jointe vers le dispositif de communication mobile s'il est identifié comme intéressant par un utilisateur.

16. Procédé selon la revendication 15, dans lequel lesdites informations documentaires sont reçues sur ledit dispositif de communication mobile sous la forme d'une structure de graphe contenant lesdites informations documentaires.

17. Procédé selon la revendication 15 ou la revendication 16, dans lequel lesdites informations documentaires reçues sont affichées statiquement ou dynamiquement sur ledit dispositif de communication mobile.

18. Procédé selon la revendication 17, dans lequel ladite étape d'affichage statique comprend en outre l'étape consistant à présenter lesdites informations documentaires dans une zone statique de l'écran dudit dispositif de communication mobile, ladite zone statique de l'écran étant une barre de titre.

19. Procédé selon la revendication 17, dans lequel ladite étape d'affichage dynamique comprend en outre les étapes consistant à mettre lesdites informations documentaires en mémoire-cache puis à les présenter à l'aide d'éléments d'interface utilisateur graphique dans une zone dynamique de l'écran dudit dispositif de communication mobile.

20. Procédé selon la revendication 19, dans lequel lesdits éléments d'interface utilisateur graphique comprennent une boîte de message surgissante.

21. Procédé selon l'une quelconque des revendications 1 à 20, dans lequel lesdites informations documentaires comprennent : (i) un type de format original du document, y compris un ou plusieurs des types d'archive, de document, de feuille de calcul, de présentation et d'image, représentés sur ledit dispositif mobile par des icônes respectives ; (ii) un sous-type de format pour identifier une application logicielle unique ; et (iii) d'autres informations documentaires comprenant au moins la taille, la date de création, la date de dernière modification et l'auteur.

22. Système (10) destiné à visualiser sur un dispositif de communication mobile (12) des informations documentaires intéressant un document annexé comme pièce jointe de courriel pour un courriel stocké sur un serveur (28), ledit système comprenant :
un moyen destiné à renommer ledit document annexé comme pièce jointe de courriel, sur le serveur, à l'aide d'une extension de fichier temporaire ;
un moyen destiné à transmettre par le serveur ledit courriel entre ledit serveur et ledit dispositif de communication mobile, sans transmettre ledit document annexé comme pièce jointe de courriel entre ledit serveur et ledit dispositif de communication mobile ;
un moyen destiné à transmettre une demande d'informations documentaires entre ledit dispositif de communication mobile et ledit serveur, les informations documentaires incluant un type de format original du document pour le document annexé comme pièce jointe de courriel ;
un moyen destiné à traiter sur le serveur ledit document annexé comme pièce jointe de courriel stocké sur le serveur en ouvrant ledit document annexé comme pièce jointe de courriel en mode binaire et en y réalisant une recherche pour obtenir lesdites informations documentaires, ladite recherche comprenant l'examen des données binaires dudit document annexé comme pièce jointe de courriel afin d'y trouver des informations documentaires comprenant le type de format original du document et l'ajout des informations documentaires à une réponse à la demande reçue du dispositif de communication mobile ;
un moyen destiné à transmettre ladite réponse contenant lesdites informations documentaires vers ledit dispositif de communication mobile ; et
un moyen destiné à recevoir ladite réponse sur ledit dispositif de communication mobile et un moyen destiné à afficher lesdites informations documentaires sur ledit dispositif de communication mobile en fonction du type de format original du document sans qu'il soit nécessaire d'obtenir la totalité du contenu du document annexé comme pièce jointe de courriel sur le dispositif de communication mobile ; et
un moyen destiné à télécharger un document annexé comme pièce jointe vers le dispositif de communication mobile s'il est identifié comme intéressant par un utilisateur.

23. Serveur (28) destiné à produire des informations documentaires intéressant un document annexé comme pièce jointe de courriel pour un courriel stocké sur le serveur, comprenant :
un moyen destiné à renommer ledit document annexé comme pièce jointe de courriel à l'aide d'une extension de fichier temporaire ;
un moyen destiné à transmettre ledit courriel audit dispositif de communication mobile (12) sans transmettre ledit document annexé comme pièce jointe de courriel audit dispositif de communication mobile ;
un moyen destiné à recevoir une demande d'informations documentaires en provenance dudit dispositif de communication mobile, les informations documentaires incluant un type de format original de document pour le document annexé comme pièce jointe de courriel ;
un moyen destiné à traiter ledit document annexé comme pièce jointe de courriel en ouvrant ledit document annexé comme pièce jointe de courriel en mode binaire et en y réalisant une recherche pour obtenir lesdites informations documentaires, ladite recherche comprenant l'examen des données binaires dudit document annexé comme pièce jointe de courriel afin d'y trouver des informations documentaires comprenant le type de format original du document et l'ajout des informations documentaires à une réponse à la demande reçue du dispositif de communication mobile ; et
un moyen destiné à transmettre ladite réponse contenant lesdites informations documentaires vers ledit dispositif de communication mobile ; et
un moyen destiné à télécharger un document annexé comme pièce jointe vers le dispositif de communication mobile s'il est identifié comme intéressant par un utilisateur.

24. Dispositif de communication mobile (12) destiné à recevoir et afficher des informations documentaires intéressant un document annexé comme pièce jointe de courriel pour un courriel stocké sur un serveur (28), comprenant :
un moyen destiné à recevoir dudit serveur ledit courriel sans le document annexé comme pièce jointe de courriel, ledit document annexé comme pièce jointe de courriel ayant été renommé par ledit serveur à l'aide d'une extension de fichier temporaire ;
un moyen destiné à transmettre vers ledit serveur une demande d'informations documentaires incluant le type de format original du document pour le document annexé comme pièce jointe de courriel ;
un moyen destiné à recevoir dudit serveur lesdites informations documentaires, lesdites informations documentaires étant produites par un traitement sur le serveur consistant à ouvrir ledit document annexé comme pièce jointe de courriel en mode binaire et à effectuer une recherche pour obtenir lesdites informations documentaires, ladite étape de recherche comprenant l'examen des données binaires dudit document annexé comme pièce jointe de courriel afin de trouver des informations documentaires incluant le type de format original du document ; et
un moyen destiné à afficher lesdites informations documentaires en fonction du type de format original du document sans qu'il soit nécessaire d'obtenir la totalité du contenu du document annexé comme pièce jointe de courriel sur le dispositif de communication mobile ; et
un moyen destiné à télécharger un document annexé comme pièce jointe vers le dispositif de communication mobile s'il est identifié comme intéressant par un utilisateur.
